# EUROPEAN PATENT APPLICATION

(11) **EP 4 534 827 A1**
(43) Date of publication of application: **09.04.2025**
(21) Application number: 24205102.7
(22) Date of filing: 07.10.2024
(51) Int. Cl.: F02C 7/042, F01D 25/02, F02C 7/055

(54) **CIRCUMFERENTIALLY TAILORED INLET GUARD FOR AN AIRCRAFT ENGINE INLET**

(30) Priority: 05.10.2023 US 202318377186
(71) Applicant: PRATT & WHITNEY CANADA CORP., Longueuil, Québec J4G 1A1 (CA)
(72) Inventor: CUNNINGHAM, Mark, (01BE5) Longueuil, J4G 1A1 (CA); AKCAYOZ, Eray, (01BE5) Longueuil, J4G 1A1 (CA); MARRANO, Roberto, (01BE5) Longueuil (CA); BRETTE, Corentin, (01BE5) Longueuil (CA)
(74) Representative: Dehns

(57) **Abstract**

A system (20) is provided for an aircraft. This aircraft system (20) includes a gas turbine engine (24), a flowpath (64) and an inlet guard (28). The gas turbine engine (24) includes a compressor section (40). The flowpath (64) projects longitudinally into the gas turbine engine (24) from an airflow inlet (66) and longitudinally through the compressor section (40). The inlet guard (28) extends across the flowpath (64) longitudinally upstream of the compressor section (40). The inlet guard (28) extends circumferentially about an axis (34). The inlet guard (28) includes a first screen (72A) and a second screen (72B). The first screen (72A) includes a plurality of first perforations (74A) with a first perforation size. The second screen (72B) is circumferentially adjacent the first screen (72A) about the axis (34). The second screen (72B) includes a plurality of second perforations (74B) with a second perforation size that is different than the first perforation size.

## Description

### TECHNICAL FIELD

This disclosure relates generally to an aircraft engine and, more particularly, to a guard screen for an airflow inlet of the aircraft engine.

### BACKGROUND INFORMATION

A gas turbine engine may include an inlet guard screen at an inlet into the gas turbine engine. This guard screen may prevent or reduce ingestion of foreign object debris into the gas turbine engine. While known guard screens have various advantages, there is still room in the art for improvement.

### SUMMARY

According to an aspect of the present disclosure, a system is provided for an aircraft. This aircraft system includes a gas turbine engine, a flowpath and an inlet guard. The gas turbine engine includes a compressor section. The flowpath projects longitudinally into the gas turbine engine from an airflow inlet and longitudinally through the compressor section. The inlet guard extends across the flowpath longitudinally upstream of the compressor section. The inlet guard extends circumferentially about an axis. The inlet guard includes a first screen and a second screen. The first screen includes a plurality of first perforations with a first perforation size. The second screen is circumferentially adjacent the first screen about the axis. The second screen includes a plurality of second perforations with a second perforation size that is different than the first perforation size.

According to another aspect of the present disclosure, another system is provided for an aircraft. This aircraft system includes a gas turbine engine, an inlet guard and a flowpath. The gas turbine engine includes a compressor section. The inlet guard extends circumferentially about and axially along an axis. The inlet guard includes a first screen and a second screen. The first screen has a first percentage of open area. The second screen has a second percentage of open area that is different than the first percentage of open area. The second screen extends circumferentially about the axis to the first screen. The second screen extends axially along the first screen. The flowpath projects longitudinally from an airflow inlet, through the inlet guard, to the compressor section.

According to still another aspect of the present disclosure, another system is provided for an aircraft. This aircraft system includes an aircraft engine and an inlet guard. The gas turbine engine includes a compressor section. A flowpath projects into the aircraft engine from an airflow inlet. The inlet guard is arranged at the airflow inlet and extends across the flowpath. The inlet guard extends circumferentially about an axis. The inlet guard includes a first screen and a second screen. The first screen includes a plurality of first perforations with a first perforation size. The second screen includes a plurality of second perforations with a second perforation size that is different than the first perforation size. The second screen is arranged circumferentially next to the first screen about the axis.

The aircraft engine may be configured as or otherwise include a gas turbine engine.

The flowpath may project radially through the first screen and the second screen into the gas turbine engine.

The first screen may include a plurality of first perforations. Each of the first perforations may have a first cross-sectional area. The second screen may include a plurality of second perforations. Each of the second perforations may have a second cross-sectional area that is different than the first cross-sectional area.

The airflow inlet may extend circumferentially about the axis between opposing circumferential sides. The airflow inlet may be radially outboard of and circumferentially overlap the first screen.

The first screen may be circumferentially aligned with the airflow inlet about the axis. The second screen may be circumferentially offset from the airflow inlet about the axis.

The second perforation size may be greater than the first perforation size.

The inlet guard may also include a third screen. The third screen may include a plurality of third perforations with a third perforation size that is different than the second perforation size. The second screen may be arranged circumferentially between the first screen and the third screen about the axis.

The airflow inlet may be a first airflow inlet. The flowpath may also project longitudinally into the gas turbine engine from a second airflow inlet. The first screen may be circumferentially aligned with the first airflow inlet about the axis. The third screen may be circumferentially aligned with the second airflow inlet about the axis.

The third perforation size may be equal to the first perforation size.

The inlet guard may also include a fourth screen. The fourth screen may include a plurality of fourth perforations with a fourth perforation size that is different than the first perforation size and the second perforation size. The third screen may be arranged circumferentially between the second screen and the fourth screen about the axis. The fourth screen may be arranged circumferentially between the first screen and the third screen about the axis.

The first screen may have a first circumferential width about the axis. The second screen may have a second circumferential width about the axis that is different than the first circumferential width. The third screen may have a third circumferential width about the axis that is equal to the first circumferential width. The fourth screen may have a fourth circumferential width about the axis that is different than the first circumferential width.

The second circumferential width may be smaller than the first circumferential width. In addition or alternatively, the fourth circumferential width may be greater than the first circumferential width.

The first screen may have a first circumferential width about the axis. The second screen may have a second circumferential width about the axis that is different than the first circumferential width.

The first screen may extend less than one-hundred and eighty degrees about the axis. In addition or alternatively, the second screen may extend more than one-hundred and eighty degrees about the axis.

The first screen may extend less than one-hundred and twenty degrees about the axis. In addition or alternatively, the second screen may extend more than one-hundred and twenty degrees about the axis.

The inlet guard may extend circumferentially about the gas turbine engine.

The inlet guard may extend axially along the axis. The first screen may axially overlap the second screen along the axis.

The inlet guard may cover an inlet into the gas turbine engine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic sectional illustration of an aircraft system with a gas turbine engine.
FIG. 2 is a schematic cross-sectional illustration of the aircraft system at an inlet structure with a single airflow inlet.
FIG. 3 is a plan view illustration of a portion of an inlet guide at an intersection between a fine screen and a coarse screen with enlarged views of the fine screen and the coarse screen.
FIG. 4 is a schematic cross-sectional illustration of the aircraft system at the inlet structure during icing condition operation.
FIG. 5 is a schematic cross-sectional illustration of the aircraft system at the inlet structure with multiple airflow inlets.

### DETAILED DESCRIPTION

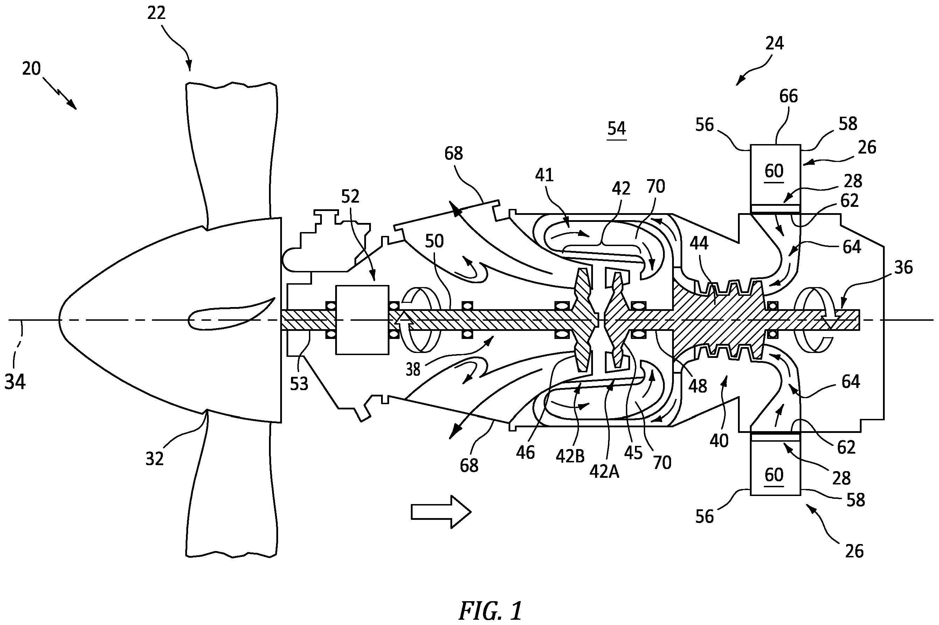

FIG. 1 illustrates a system 20 for an aircraft. This aircraft may be configured as an airplane, a helicopter, a drone (e.g., an unmanned aerial vehicle (UAV)) or any other manned or unmanned aerial vehicle or system. The aircraft system 20 of FIG. 1 includes a mechanical load 22 and a gas turbine engine 24 for powering the mechanical load 22. The aircraft system 20 also includes an (e.g., annular) airflow inlet structure 26 and a circumferentially tailored inlet guard 28; e.g., an inlet screen assembly with circumferentially non-uniform screen spacing.

The mechanical load 22 includes at least (or only) one rotor 32 operable to be rotatably driven by the gas turbine engine 24. This mechanical load 22 may be configured as a propulsor for propelling the aircraft during flight. The driven rotor 32, for example, may be a bladed propulsor rotor. An example of the propulsor rotor is a propeller rotor where the gas turbine engine 24 is a turboprop gas turbine engine. Another example of the propulsor rotor is a helicopter rotor (e.g., a main rotor) where the gas turbine engine 24 is a turboshaft gas turbine engine. The mechanical load 22, however, may alternatively be configured as an electrical power generator. The driven rotor 32, for example, may be a generator rotor where the gas turbine engine 24 is an auxiliary power unit (APU). The present disclosure, however, is not limited to the foregoing exemplary driven rotor types nor the foregoing exemplary gas turbine engine types.

The gas turbine engine 24 of FIG. 1 extends axially along an axis 34. This axis 34 may be a centerline axis of the gas turbine engine 24 and/or a rotational axis of one or more rotating assemblies (e.g., 36 and 38) within the gas turbine engine 24. The gas turbine engine 24 of FIG. 1 includes a compressor section 40, a combustor section 41 and a turbine section 42. The turbine section 42 of FIG. 1 includes a high pressure turbine (HPT) section 42A and a low pressure turbine (LPT) section 42B, which LPT section 42B may also be referred to as a power turbine (PT) section and/or a free turbine section.

The compressor section 40 includes a bladed compressor rotor 44. The HPT section 42A includes a bladed high pressure turbine (HPT) rotor 45. The LPT section 42B includes a bladed low pressure turbine (LPT) rotor 46, which LPT rotor 46 may also be referred to as a power turbine (PT) rotor and/or a free turbine rotor. Each of these bladed engine rotors 44-46 includes one or more arrays of rotor blades (e.g., airfoils, vanes, etc.), where each rotor blade array is arranged circumferentially around and connected to a respective rotor base; e.g., a disk or a hub.

The compressor rotor 44 is connected to the HPT rotor 45 through a high speed shaft 48. At least (or only) the compressor rotor 44, the HPT rotor 45 and the high speed shaft 48 may collectively form or may otherwise be a part of the high speed rotating assembly 36; e.g., a high speed spool. The LPT rotor 46 is connected to a low speed shaft 50. At least (or only) the LPT rotor 46 and the low speed shaft 50 may collectively form or may otherwise be a part of the low speed rotating assembly 38. This low speed rotating assembly 38 of FIG. 1 is coupled to the driven rotor 32 through a geartrain 52 (e.g., an epicyclic geartrain) and a propulsor shaft 53. However, in other embodiments, the driven rotor 32 may be part of the low speed rotating assembly 38 where, for example, the low speed shaft 50 connects the LPT rotor 46 to the driven rotor 32 without the geartrain 52.

The inlet structure 26 is configured to direct air into the gas turbine engine 24 from an environment 54 external to the aircraft system 20 and, more generally, external to the aircraft. This inlet structure 26 may be configured as a standalone structure. Alternatively, the inlet structure 26 may be configured as a part of a housing structure for the gas turbine engine 24 and/or one or more other components of the aircraft.

The inlet structure 26 of FIG. 1 includes a (e.g., annular) first wall 56 and a (e.g., annular) second wall 58. Each of these inlet structure walls 56 and 58 extends circumferentially about (e.g., completely around) the gas turbine engine 24. The first wall 56 is spaced axially along the axis 34 from the second wall 58, thereby providing the inlet structure 26 with an inlet plenum 60; e.g., an internal volume such as an annular cavity. This inlet plenum 60 extends axially along the axis 34 within the inlet structure 26 between and to the first wall 56 and the second wall 58. The inlet plenum 60 extend radially inward (relative to the axis 34) within the inlet structure 26 to the gas turbine engine 24 and, more particularly, to an airflow inlet 62 into the gas turbine engine 24. This engine inlet 62 may be an opening (e.g., an annular orifice) in an outer case of the gas turbine engine 24 that houses the compressor section 40, the combustor section 41, the HPT section 42A and the LPT section 42B.

During gas turbine engine operation, (e.g., fresh, ambient) air from the external environment 54 enters a flowpath 64 of the aircraft system 20 and its gas turbine engine 24 through an airflow inlet 66 into the inlet structure 26. This flowpath 64 extends longitudinally in the aircraft system 20 from the structure inlet 66 to a combustion products exhaust 68 from the gas turbine engine 24. An upstream portion of the flowpath 64 is formed within and extends longitudinally through the inlet structure 26. The flowpath 64 of FIG. 1, for example, extends radially inward towards the axis 34 from the structure inlet 66, through the inlet plenum 60, to the engine inlet 62. A downstream portion of the flowpath 64 is formed within and extends longitudinally through the gas turbine engine 24. The flowpath 64 of FIG. 1, for example, projects radially inward towards the axis 34 into the gas turbine engine 24 from the engine inlet 62. The flowpath 64 subsequently extends from the engine inlet 62, sequentially through the compressor section 40, the combustor section 41, the HPT section 42A and the LPT section 42B, to the engine exhaust 68.

The flowpath 64 directs the air longitudinally (e.g., in a radial inward direction towards the axis 34) through the inlet plenum 60 and the engine inlet 62 into the gas turbine engine 24. Within the gas turbine engine 24, the air is compressed by the compressor rotor 44 and directed into a (e.g., annular) combustion chamber 70 of a (e.g., annular) combustor in the combustor section 41. Fuel is injected into the combustion chamber 70 and mixed with the compressed air to provide a fuel-air mixture. This fuel-air mixture is ignited and combustion products thereof flow through and sequentially cause the HPT rotor 45 and the LPT rotor 46 to rotate before being exhausted from the gas turbine engine 24 through the engine exhaust 68 into the external environment 54. The rotation of the HPT rotor 45 drives rotation of the compressor rotor 44 and, thus, compression of the air received through the inlet plenum 60 and the engine inlet 62. The rotation of the LPT rotor 46 drives rotation of the driven rotor 32. Where the driven rotor 32 is a propulsor rotor such as the propeller rotor shown in FIG. 1, the rotation of the driven rotor 32 propels air outside of the gas turbine engine 24 in an aft direction along the axis 34 to provide forward aircraft flight. Where the driven rotor 32 is the generator rotor, the rotation of the driven rotor 32 drives the electrical power generator to generate electrical power.

Under certain circumstances, the air entering the flowpath 64 through the structure inlet 66 may include foreign object debris. For example, during winter aircraft operation, some or all of an ice accumulation on an exterior surface of the aircraft and its aircraft system 20 may break off and be ingested by the flowpath 64 through the structure inlet 66. Large pieces of ice may cause damage to the gas turbine engine 24 (e.g., to the blades of the compressor rotor 44 and/or vanes within the compressor section 40) if allowed to move freely with the incoming air along the flowpath 64 into the gas turbine engine 24 and its compressor section 40. Other relatively large foreign object debris such as a bird may also cause damage to the gas turbine engine 24 (e.g., to the blades of the compressor rotor 44 and/or vanes within the compressor section 40) if allowed to move freely with the incoming air along the flowpath 64 into the gas turbine engine 24 and its compressor section 40.

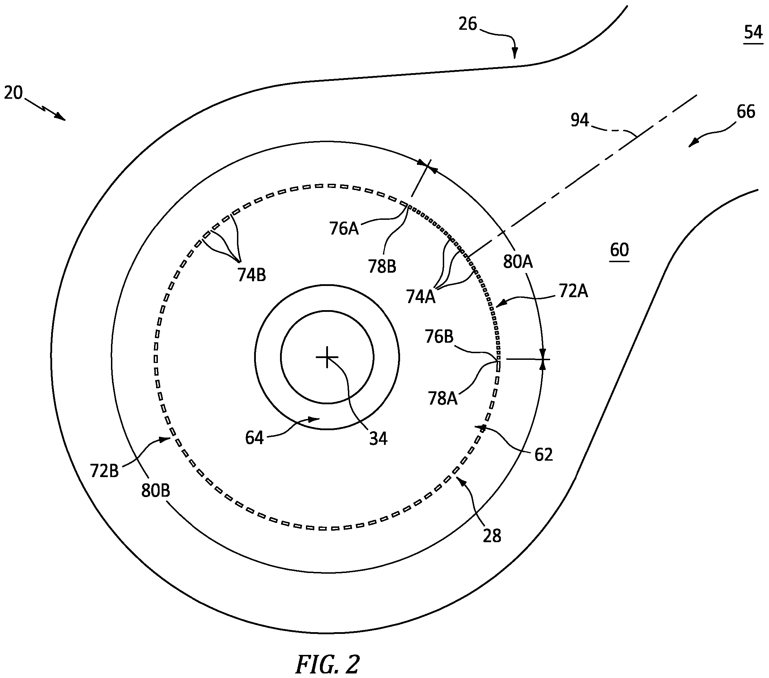

To prevent or reduce foreign object debris related damage, the inlet guard 28 is arranged along the flowpath 64 (e.g., anywhere) longitudinally upstream of the compressor section 40 and its compressor rotor 44. The inlet guard 28 of FIG. 1, for example, is arranged at (e.g., on, adjacent or proximate) the engine inlet 62. More particularly, the inlet guard 28 of FIG. 1 is disposed in (or adjacent) the inlet plenum 60 radially outboard of (or inline with) the engine inlet 62. This inlet guard 28 extends axially across the flowpath 64 from the first wall 56 to the second wall 58. Referring to FIG. 2, the inlet guard 28 also extends circumferentially about (e.g., completely around) the axis 34. The inlet guard 28 thereby laterally overlaps (e.g., completely axially and/or circumferentially covers) the engine inlet 62.

The inlet guard 28 includes and is formed by a plurality of arcuate inlet guard screens. The inlet guard screens of FIG. 2 include a fine screen 72A and a coarse screen 72B. The fine screen 72A includes a plurality of fine perforations 74A (e.g., relatively small through-apertures), where each of the fine perforations 74A projects (e.g., radially) through the fine screen 72A. The coarse screen 72B includes a plurality of coarse perforations 74B (e.g., relatively large through-apertures), where each of the coarse perforations 74B projects (e.g., radially) through the coarse screen 72B. The screen perforations 74A and 74B (generally referred to as "74") fluidly couple a portion of the flowpath 64 longitudinally upstream of (e.g., radially outboard of) the inlet guard 28 with a portion of the flowpath 64 longitudinally downstream of (e.g., radially inboard of) the inlet guard 28. With this arrangement, the inlet guard 28 of FIG. 1 filters (e.g., all of) the air flowing longitudinally within the flowpath 64 before entering the compressor section 40 and, more generally, the gas turbine engine 24. The inlet guard 28 may thereby block the foreign object debris from moving along the flowpath 64 into the gas turbine engine 24 and its compressor section 40.

Referring to FIG. 2, each of the inlet guard screens 72A, 72B (generally referred to as "72") extends circumferentially about the axis 34 between and to a circumferential first end 76A, 76B of the respective inlet guard screen 72A, 72B and a second end 78A, 78B of the respective inlet guard screen 72A, 72B. The fine screen 72A of FIG. 2 is arranged circumferentially next to the coarse screen 72B about the axis 34. The fine screen first end 76A of FIG. 2, for example, is disposed next to and may engage (e.g., contact) and/or otherwise be connected to the coarse screen second end 78B. Similarly, the fine screen second end 78A of FIG. 2 is disposed next to and may engage and/or otherwise be connected to the coarse screen first end 76B. The fine screen 72A and the coarse screen 72B of FIG. 2 thereby collectively provide the inlet guard 28 with a full-hoop (e.g., tubular) body.

The fine screen 72A has a circumferential width 80A which extends circumferentially about the axis 34 between the fine screen first end 76A and the fine screen second end 78A. The coarse screen 72B has a circumferential width 80B which extends circumferentially about the axis 34 between the coarse screen first end 76B and the coarse screen second end 78B. This coarse screen width 80B may be different than (e.g., less than) the fine screen width 80A. The fine screen width 80A, for example, may extend less than one-hundred and eighty degrees (180°), one-hundred and twenty degrees (120°) or ninety degrees (90°) about the axis 34. The coarse screen width 80B, by contrast, may respectively extend more than one-hundred and eighty degrees (180°), two-hundred and forty degrees (240°) or two-hundred and seventy degrees (270°) about the axis 34. The coarse screen 72B of FIG. 2 may thereby form a major portion (e.g., more than 50%) of the inlet guard 28. The present disclosure, however, is not limited to such an exemplary relationship between the fine screen 72A and the coarse screen 72B. The fine screen width 80A, for example, may be adjusted based on a circumferential width of the structure inlet 66.

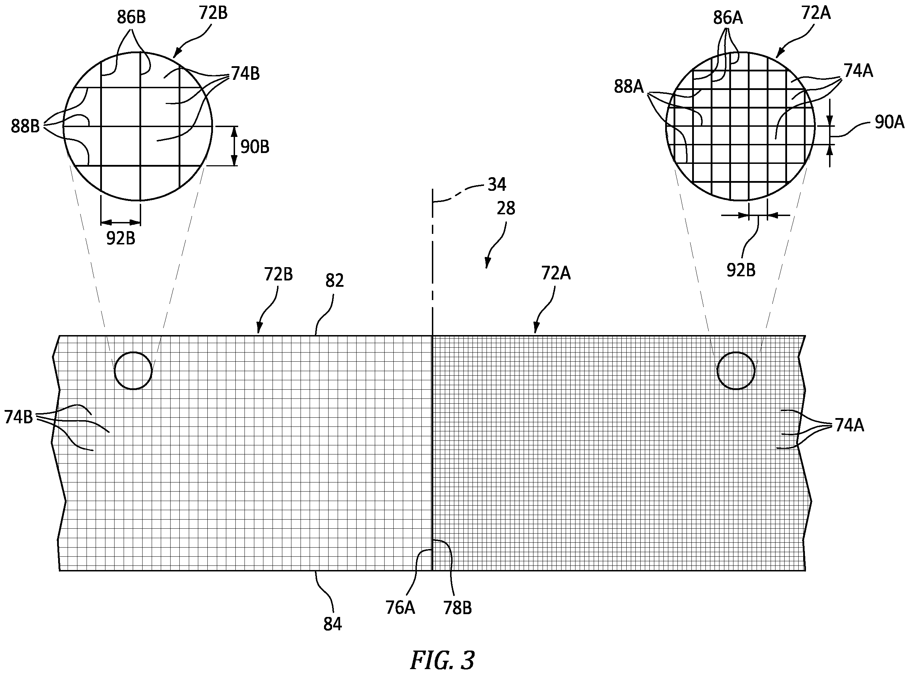

Referring to FIG. 3, each of the inlet guard screens 72A, 72B may extend axially along the axis 34 between and to an axial first side 82 of inlet guard screens 72 and an axial second side 84 of the inlet guard screens 72. The screen first side 82 may also be an axial first side of the inlet guard 28, and the screen second side 84 may also be an axial second side of the inlet guard 28. The inlet guard screens 72A and 72B are thereby axially aligned along the axis 34. The fine screen 72A thereby extends axially along (e.g., axially overlaps) the coarse screen 72B, and the coarse screen 72B thereby extends axially along (e.g., axially overlaps) the fine screen 72A. Moreover, the fine screen 72A and the coarse screen 72B of FIG. 3 share a common (the same) axial length along the axis 34.

Each of the inlet guard screen 72A, 72B of FIG. 3 includes a plurality of screen elements 86A, 86B (generally referred to as "86") and 88A, 88B (generally referred to as "88"); e.g., elongated members, ligaments, etc. These screen elements 86 and 88 are arranged in a porous web structure; e.g., a lattice structure. The screen elements 86 and 88, for example, are woven together or otherwise arranged and interconnected into a mesh that at least partially or completely forms the respective inlet guard screen 72. With this arrangement, the screen elements 86 and 88 form the screen perforations 74 within the respective inlet guard screen 72. These screen perforations 74 may be arranged in one or more axially extending arrays and/or one or more circumferentially extending arrays. Each of the screen perforations 74 may be formed by and extend axially within the respective inlet guard screen 72 between a respective axially adjacent pair of the screen elements 88. Each of the screen perforations 74 may also be formed by and extend circumferentially within the respective inlet guard screen 72 between a respective circumferentially adjacent pair of the screen elements 86.

Some or all of the fine perforations 74A in the fine screen 72A may be configured with a common geometry; e.g., shape and/or size. Each fine perforation 74A of FIG. 3, for example, is configured with a common polygonal shape; e.g., a rectangular shape. Each fine perforation 74A of FIG. 3 is also configured with a common size; e.g., axial width 90A, circumferential width 92A and/or cross-sectional area. The fine perforations 74A in the fine screen 72A of FIG. 3 may thereby have uniform configuration axially and/or circumferentially along (e.g., an entirety of) the fine screen 72A. Similarly, some or all of the coarse perforations 74B in the coarse screen 72B may be configured with a common geometry; e.g., shape and/or size. Each coarse perforation 74B of FIG. 3, for example, is configured with a common polygonal shape; e.g., a rectangular shape. Each coarse perforation 74B of FIG. 3 is also configured with a common size; e.g., axial width 90B, circumferential width 92B and/or cross-sectional area. The coarse perforations 74B in the coarse screen 72B of FIG. 3 may thereby have uniform configuration axially and/or circumferentially along (e.g., an entirety of) the coarse screen 72B. Alternatively, the geometries of the coarse perforations 74B may vary along a portion or an entirety of the coarse screen 72B. For example, the shape and/or size of the coarse perforations 74B may gradually or intermittently change to vary open area axially and/or circumferentially along the coarse screen 72B. In addition or alternatively, the geometries of the fine perforation 74A may vary along a portion or an entirety of the fine screen 72A. For example, the shape and/or size of the fine perforation 74A may gradually or intermittently change to vary open area axially and/or circumferentially along the fine screen 72A.

While the fine perforations 74A and the coarse perforations 74B may (or may not) share a common shape, the size of each fine perforation 74A is smaller than the size of each coarse perforation 74B. The fine perforation axial width 90A, for example, may be smaller than the coarse perforation axial width 90B. The fine perforation circumferential width 92A may also or alternatively be smaller than the coarse perforation circumferential width 92B. The fine perforation cross-sectional area may thereby be smaller than the coarse perforation cross-sectional area. By providing the fine perforations 74A with smaller cross-sectional areas than the coarse perforations 74B, the fine screen 72A may be provided with a smaller percentage of open area (POA) than a percentage of open area of the coarse screen 72B. The term "percentage of open area" may describe a percentage of a face surface of a screen that is occupied by open area, where the open area is collectively formed by perforations in the screen. Thus, since the fine screen elements 86A and 88A in the fine screen 72A are spaced closer together than the coarse screen elements 86B and 88B in the coarse screen 72B, more of a face surface of the fine screen 72A is occupied by its fine screen elements 86A and 88A than a face surface of the coarse screen 72B is occupied by its coarse screen elements 86B and 88B. With such an arrangement, the fine screen 72A may filter out finer debris out of the air flowing within the flowpath 64 than the coarse screen 72B. As a result, the fine screen 72A is associated with a higher flow resistance thereacross than the coarse screen 72B.

Referring to FIG. 2, the fine screen 72A is circumferentially and axially aligned with the structure inlet 66. The structure inlet 66 of FIG. 2, for example, is disposed radially outboard of and circumferentially and/or axially overlaps at least a center portion or the entirety of the fine screen 72A. The fine screen 72A of FIG. 2 is thereby located along a direct line-of-sight 94 from the structure inlet 66 to the engine inlet 62. By contrast, the coarse screen 72B may be circumferentially offset from the structure inlet 66. The structure inlet 66 of FIG. 2, for example, may only circumferentially overlap one or more circumferential end portions of the coarse screen 72B, or may not circumferentially overlap the coarse screen 72B at all. The coarse screen 72B of FIG. 2 is thereby located to circumferential peripheral sides of the direct line-of-sight 94 from the structure inlet 66 to the engine inlet 62.

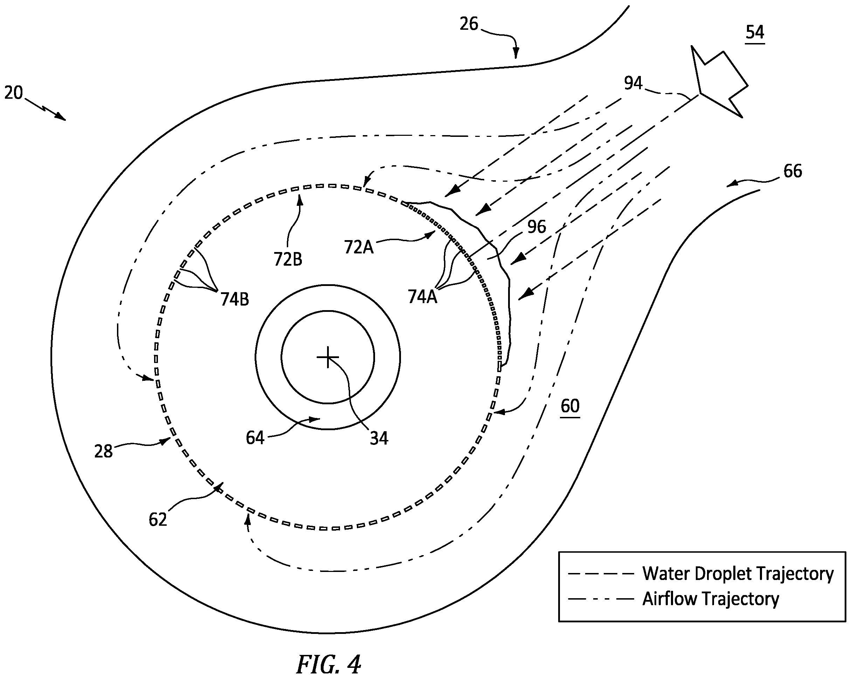

Referring to FIG. 4, the foregoing arrangement may be particularly useful during icing conditions. Ice and/or supercooled water droplets entering the flowpath 64 through the structure inlet 66, for example, may impinge against and be blocked by the fine screen 72A. Moreover, the impinging incoming air with the water droplets may also tend to cause ice 96 to accrete on the fine screen 72A rather than the coarse screen 72B. Thus, even where airflow across the fine screen 72A is reduced or blocked by ice accretions, the incoming air may continue to flow through the (e.g., substantially) unobstructed coarse screen 72B. Furthermore, during non-icing conditions, the incoming air is subject to less overall air resistance than if the entire inlet guard 28 was formed by a single screen with a completely uniform perforation size. The inlet guard 28 and its inlet guard screens 72 may thereby facilitate improved and more stable performance during both icing and non-icing conditions.

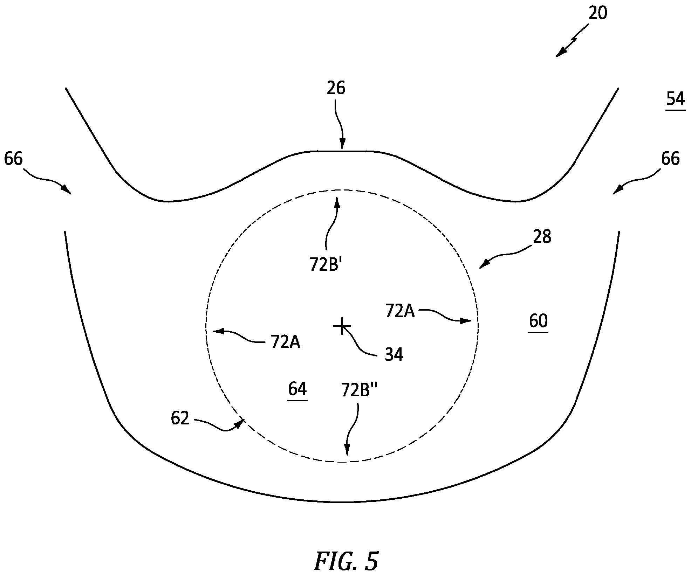

In some embodiments, referring to FIG. 2, the inlet structure 26 may include a single structure inlet 66 into the inlet plenum 60. In other embodiments however, referring to FIG. 5, the inlet structure 26 may include multiple of the structure inlets 66 into the inlet plenum 60. With such an arrangement, the inlet guard 28 may include multiple of the fine screens 72A such that each structure inlet 66 may circumferentially and/or axially overlap a respective one of the fine screens 72A. The inlet guard 28 of FIG. 5 also include multiple of the coarse screens 72B', 72B". Here, the fine screens 72A are circumferentially interspersed with the coarse screens 72B' and 72B", and the coarse screens 72B' and 72B" are circumferentially interspersed with the fine screens 72A. In the specific arrangement of FIG. 5, the fine screens 72A are configured with a common circumferential width. This fine screen circumferential width may be greater than the circumferential width of the (e.g., top) coarse screen 72B', and may be less than the circumferential width of the (e.g., bottom) coarse screen 72B". The present disclosure, however, is not limited to such an exemplary arrangement nor to such an exemplary dimensional relationships.

The aircraft system 20 is described above as including the gas turbine engine 24. The present disclosure, however, is not limited to including such an exemplary type of aircraft engine. The aircraft system 20, for example, may alternatively include a reciprocating piston engine, a rotary engine (e.g., a Wenkel engine) or any other type of aircraft engine which may receive its incoming air through a circumferentially and/or otherwise tailored inlet guard 28 as generally described above.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A system (20) for an aircraft, comprising:
a gas turbine engine (24) including a compressor section (40);
a flowpath (64) projecting longitudinally into the gas turbine engine (24) from an airflow inlet (66) and longitudinally through the compressor section (40); and
an inlet guard (28) extending across the flowpath (64) longitudinally upstream of the compressor section (40), the inlet guard (28) extending circumferentially about an axis (34), the inlet guard (28) including a first screen (72A) and a second screen (72B), the first screen (72A) comprising a plurality of first perforations (74A) with a first perforation size, the second screen (72B) circumferentially adjacent the first screen (72A) about the axis (34), and the second screen (72B) comprising a plurality of second perforations (74B) with a second perforation size that is different than the first perforation size.

2. The system (20) of claim 1, wherein:
the first screen (72A) is circumferentially aligned with the airflow inlet (66) about the axis (34); and
the second screen (72B) is circumferentially offset from the airflow inlet (66) about the axis (34).

3. The system (20) of claim 1 or 2, wherein the second perforation (74B) size is greater than the first perforation (74A) size.

4. The system (20) of any preceding claim, wherein:
the inlet guard (28) further includes a third screen comprising a plurality of third perforations with a third perforation size that is different than the second perforation size; and
the second screen (72B') is arranged circumferentially between the first screen (72A) and the third screen about the axis (34).

5. The system (20) of claim 4, wherein:
the airflow inlet (66) is a first airflow inlet, and the flowpath (64) further projects longitudinally into the gas turbine engine (24) from a second airflow inlet (66);
the first screen (72A) is circumferentially aligned with the first airflow inlet (66) about the axis (34); and
the third screen is circumferentially aligned with the second airflow inlet (66) about the axis (34).

6. The system (20) of claim 4 or 5, wherein the third perforation size is equal to the first perforation size.

7. The system (20) of any of claims 4 to 6, wherein:
the inlet guard (28) further includes a fourth screen (72B") comprising a plurality of fourth perforations with a fourth perforation size that is different than the first perforation size and the second perforation size;
the third screen is arranged circumferentially between the second screen (72B) and the fourth screen (72B") about the axis (34); and
the fourth screen (72B") is arranged circumferentially between the first screen (72A) and the third screen about the axis (34).

8. The system (20) of claim 7, wherein:
the first screen (72A) has a first circumferential width (80A) about the axis (34);
the second screen (72B) has a second circumferential width (80B) about the axis (34) that is different than the first circumferential width (80A);
the third screen has a third circumferential width about the axis (34) that is equal to the first circumferential width (80A); and
the fourth screen (72B") has a fourth circumferential width about the axis (34) that is different than the first circumferential width (80A), optionally wherein at least one of:
the second circumferential width (80B) is smaller than the first circumferential width (80A); or
the fourth circumferential width is greater than the first circumferential width (80A).

9. The system (20) of any preceding claim, wherein:
the first screen (72A) has a first circumferential width (80A) about the axis (34); and
the second screen (72B) has a second circumferential width (80B) about the axis (34) that is different than the first circumferential width (80A).

10. The system (20) of any preceding claim, wherein at least one of:
the first screen (72A) extends less than one-hundred and eighty degrees about the axis (34); and/or
the second screen (72B) extends more than one-hundred and eighty degrees about the axis (34), optionally wherein at least one of:
the first screen (72A) extends less than one-hundred and twenty degrees about the axis (34); and/or
the second screen (72B) extends more than one-hundred and twenty degrees about the axis (34).

11. The system (20) of any preceding claim, wherein:
the inlet guard (28) extends circumferentially about the gas turbine engine (24); and/or
the inlet guard (28) extends axially along the axis (34) and the first screen (72A) axially overlaps the second screen (72B) along the axis (34).

12. A system (20) for an aircraft, comprising:
a gas turbine engine (24) including a compressor section (40);
an inlet guard (28) extending circumferentially about and axially along an axis (34), the inlet guard (28) including a first screen (72A) and a second screen (72B), the first screen (72A) comprising a first percentage of open area, the second screen (72B) comprising a second percentage of open area that is different than the first percentage of open area, the second screen (72B) extending circumferentially about the axis (34) to the first screen (72A), and the second screen (72B) extending axially along the first screen (72A); and
a flowpath (64) projecting longitudinally from an airflow inlet (66), through the inlet guard (28), to the compressor section (40).

13. The system (20) of claim 12, wherein at least one of:
the flowpath (64) projects radially through the first screen (72A) and the second screen (72B) into the gas turbine engine (24);
the first screen (72A) comprises a plurality of first perforations (74A), and each of the plurality of first perforations (74A) has a first cross-sectional area, the second screen (72B) comprises a plurality of second perforations (74B), and each of the plurality of second perforations (74B) has a second cross-sectional area that is different than the first cross-sectional area; and/or
the airflow inlet (66) extends circumferentially about the axis (34) between opposing circumferential sides and the airflow inlet (66) is radially outboard of and circumferentially overlaps the first screen (72A).

14. A system (20) for an aircraft, comprising:
an aircraft engine with a flowpath (64) projecting into the aircraft engine from an airflow inlet (66); and
an inlet guard (28) arranged at the airflow inlet (66) and extending across the flowpath (64), the inlet guard (28) extending circumferentially about an axis (34), the inlet guard (28) including a first screen (72A) and a second screen (72B), the first screen (72A) comprising a plurality of first perforations (74A) with a first perforation size, the second screen (72B) comprising a plurality of second perforations (74B) with a second perforation size that is different than the first perforation size, and the second screen (72B) arranged circumferentially next to the first screen (72A) about the axis (34).

15. The system (20) of claim 14, wherein the aircraft engine comprises a gas turbine engine (24).
